# EUROPEAN PATENT APPLICATION

(11) **EP 3 376 017 A1**
(43) Date of publication of application: **19.09.2018**
(21) Application number: 17174960.9
(22) Date of filing: 08.06.2017
(51) Int. Cl.: F02N 11/08, F02N 19/02, B60H 1/00, H01M 10/625, B60L 11/18, B60K 1/04

(54) **HEATER CONTROL APPARATUS AND METHOD FOR CONTROLLING HEATER FOR BATTERY**

(30) Priority: 13.03.2017 JP 2017047147
(71) Applicant: Kabushiki Kaisha Toshiba, Minato-ku Tokyo 105-8001 (JP)
(72) Inventor: Ogawa, Takaya, Tokyo, 105-8001 (JP); Oota, Toshiya, Tokyo, 105-8001 (JP); Matsushita, Hiroki, Tokyo, 105-8001 (JP)
(74) Representative: Hoffmann Eitle

(57) **Abstract**

According to one embodiment, a heater control apparatus for a battery (10) includes a temperature sensor (13) for sensing the temperature of a battery (10) which outputs electric power for a driving target 82), and a controller (11) for controlling a heater (12) which heats the battery (10). The controller (11) is configured to calculate a minimum start condition corresponding to the start characteristics of the driving target (2), based on relationships between the remaining capacity of the battery (10) and the temperature, and to control the heater (12) based on the minimum start condition.

## Description

Embodiments described herein relate generally to a heater control apparatus and a heater control method for a battery.

In general, the output characteristics of a battery installed on a vehicle degrade when the ambient temperature is low, as in cold climates. At low temperature, therefore, there may be a case where the battery cannot provide such a high-current output as required when the engine is started.

Conventionally, when the engine is started at low temperature, the battery is heated by a heater and the output characteristics of the battery are improved thereby. In the case of a battery installed on a vehicle, a heater heats that battery, using electric power of the battery.

At low temperature, heater control is performed, in which the battery is heated by the heater to provide improved output characteristics. If the heater is simply (or automatically) turned on, the electric power of the battery may be wasted, and the remaining capacity of the battery may become insufficient. For example, when the engine is started, the battery has to provide a high-current output, so that the engine may not be started successfully.

On the other hand, since the heat capacity of the battery is large, it cannot be heated quickly. In other words, after the heater is turned on, a certain waiting time is required until the battery is sufficiently heated. In order to shorten the waiting time, the output of the heater should be increased, but this method has limitations in that the battery cannot provide a high-current output.

Under the circumstances, there is a demand for optimal heater control which prevents the remaining capacity of a battery from becoming insufficient at low temperature and which enables providing a necessary battery output.
FIG. 1 is a block diagram illustrating the configuration of a battery apparatus of an embodiment.
FIG. 2 is a diagram illustrating a battery-related circuit configuration of the embodiment.
FIG. 3 is a graph illustrating how voltage characteristics are when a battery of the embodiment is charged and discharged.
FIG. 4 is a graph illustrating cranking time mapping data obtained in the embodiment.
FIG. 5 is a graph illustrating how the cranking time mapping data obtained in the embodiment is related to heater control.
FIG. 6 is a graph illustrating voltage drop mapping data obtained in the embodiment.
FIG. 7 is a flowchart illustrating how the cranking time mapping data and the voltage drop mapping data are prepared according to the embodiment.
FIG. 8 is a flowchart illustrating heater control processing according to the embodiment.
FIG. 9 is a block diagram illustrating a modification of the embodiment.

In general, according to one embodiment, a heater control apparatus for a battery includes: a temperature sensor for sensing the temperature of a battery which outputs electric power for a driving target; and a controller for controlling a heater which heats the battery. The controller is configured to calculate a minimum start condition corresponding to the start characteristics of the driving target, based on relationships between the remaining capacity of the battery and the temperature, and to control the heater based on the minimum start condition.

Various embodiments will be described hereinafter with reference to the accompanying drawings.

### [Configuration of Battery Device]

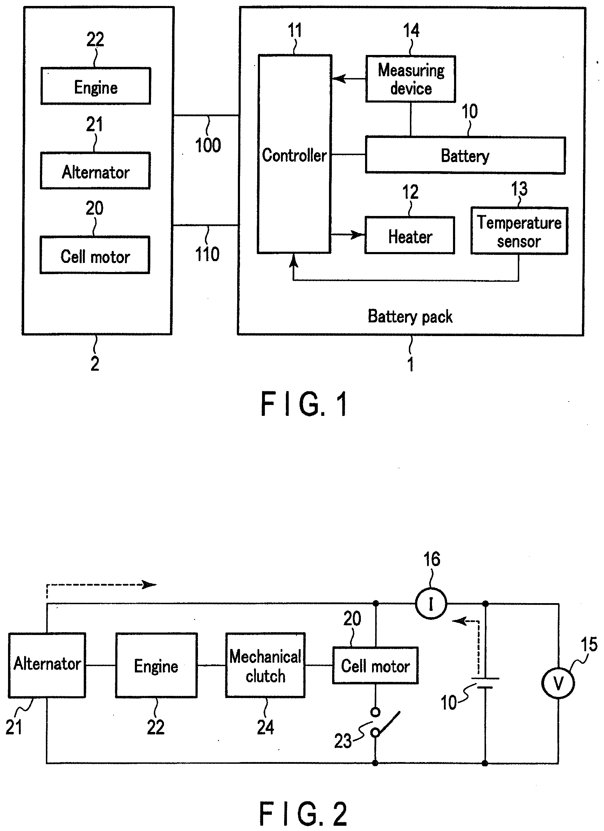

FIG. 1 is a block diagram illustrating the configuration of a battery device 1 of the present embodiment (the battery device 1 may be hereinafter referred to as a battery pack). The battery pack 1 of the present embodiment is an on-board battery device installed on a vehicle and provides electric power for the cell motor 20 of a vehicle body 2. The battery pack 1 is supplied with electric power from an alternator 21 included in the vehicle body 2. The alternator 21 generates electric power using driving power provided by an engine 22 included in the vehicle body 2. The battery pack 1 exchanges electric power and control signals with the vehicle body 2 via a power line 100 and a control signal line 110.

As shown in FIG. 1, the battery pack 1 includes a battery 10, a controller 11, a heater 12, a temperature sensor 13 and a measuring device 14. The battery 10 includes a plurality of battery cells, and supplies the electric power to the cell motor 20 required for starting the engine 22, as will be described later. The battery 10 is charged with electric power output from the alternator 21.

The controller 11 is a microprocessor, for example, and serves as a controller for performing the overall control of the battery pack 1. As will be described later, the controller 11 controls the heater 12 by which the battery 10 is heated. Under the control of the controller 11, the heater 12 generates heat by use of the electric power of the battery 10 and heats the battery 10. The temperature sensor 13 senses the internal temperature of the battery pack 1 or the ambient temperature of the battery 10, and supplies the measurement result to the controller 11. The measuring device 14 includes a voltmeter and an ammeter, measures the input/output voltage and the input/output current of the battery 10, and supplies the measurement results to the controller 11.

FIG. 2 is a block diagram illustrating a circuit configuration related to the battery 10 of the present embodiment. As shown in FIG. 2, each of the terminals of the battery 10 is connected to the cell motor 20 and the alternator 21. When a cranking switch (namely, an engine start switch) 23 connected to the cell motor 20 is turned on, the cell motor 20 is supplied with a driving current (indicated by the broken line) in accordance with a discharge operation from the battery 10 and is started thereby.

In the vehicle body 2, the engine 22 is connected to the cell motor 20 via a mechanical clutch 24 and is started by the driving of the cell motor 20. After the engine 22 is started, the alternator 21 generates electric power in accordance with the driving power of the engine 22. Because of the electric power generated by the alternator 21, the battery 100 is supplied with a current (indicated by the broken line) and is charged thereby.

In the circuit shown in FIG. 2, the controller 11 receives voltage (V) measurement results and current (I) measurement results, which are respectively measured by the voltmeter 15 and ammeter 16 of the measuring device 14. The controller 11 monitors the state of the battery 10, based on the measurement results and the temperature sensed by the temperature sensor 13. As will be described below, the state of the battery 10 is expressed by a charged/discharged state, a state of charge (SOC), output characteristics, an ambient temperature and the like. Based on the state of the battery 10, the controller 11 controls the heater 12, as will be described below.

### [Operation of Present Embodiment]

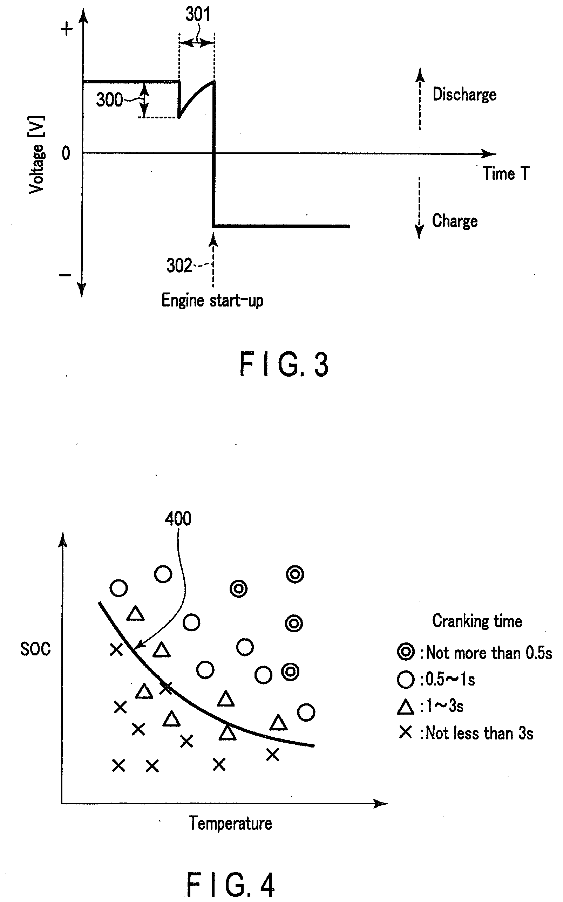

FIG. 3 is a graph illustrating how voltage characteristics are when the battery 10 is charged and discharged in the cranking operation of the vehicle body 2. In FIG. 3, the voltage plus direction indicates the discharged state of the battery 10, and the voltage minus direction indicates the charged state of the battery 10. The charging/discharging operations of the battery 10 performed at the time of cranking will be described with reference to FIGS. 2 and 3.

As shown in FIG. 2, when the cranking switch 23 is turned on, a cranking event is generated, and a high current is supplied from the battery 10 to the cell motor 20. It is assumed that the mechanical clutch 24 is in the off state then. Since the high current supplied from the battery 10 in accordance with the discharging operation, a voltage drop occurs (300), as shown in FIG. 3. The discharge time of the battery 10 corresponds to the current supply time of the cell motor 20.

When the cell motor 20 is driven, the mechanical clutch 24 is turned on, and the engine 22 is started. After the engine 22 is started, the alternator 21 generates electric power in accordance with the driving power of the engine 22. The cranking switch 23 is in the off state then.

Because the electric power is generated by the alternator 21, the battery 10 switches from the discharge state to the charge state (302), as shown in FIG. 3. The time between the actuation of the cell motor 20 (which is actuated by the discharge operation of the battery 10 in the on state of the cranking switch 23) and the start of the engine 22 (namely, the start of the charging operation of the battery 10) is defined to as a cranking time (301). As can be seen from this, the cranking is a kind of preparatory operation before the start of the engine.

Although the controller 11 of the battery pack 1 is not informed of the generation of the cranking event, it recognizes the generation of the cranking event based on the discharge pattern which the battery 10 shows after the high current is supplied from the battery 10. To be more specific, the controller 11 determines that cranking is generated, based on the voltage characteristics which the battery 10 in the discharging state shows in the cranking time (301).

The controller 11 determines that an event (302) to start the engine 22 is generated, based on the charging operation which the battery 10 starts after the cranking. If the charging operation of the battery 10 is not started after the cranking or if re-cranking is detected, the controller 11 determines that the start of the engine fails.

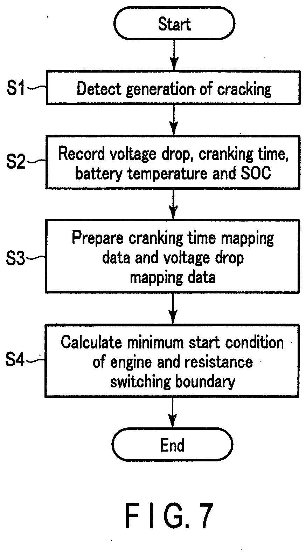

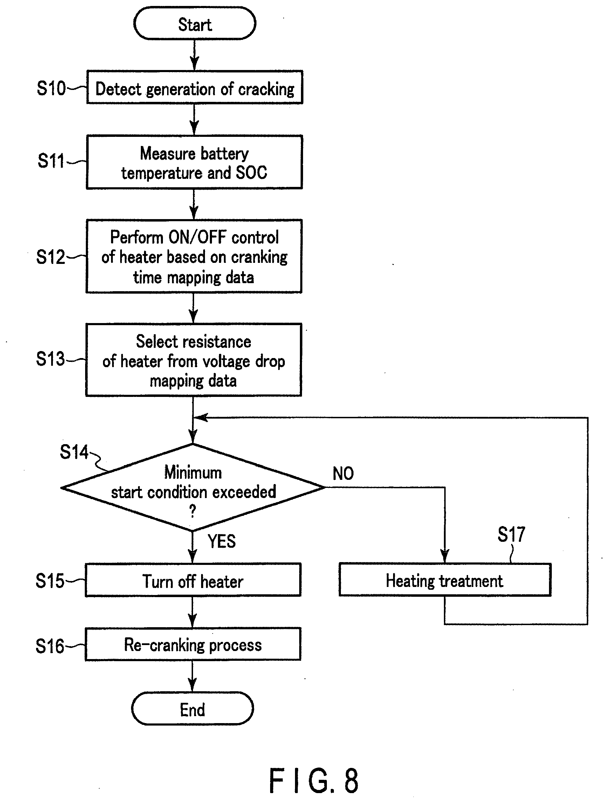

A description will be given, with reference to FIGS. 4 to 8, as to how the heater control is executed according to the embodiment when the battery 10 performs the charging/discharging operation in the cranking time. FIG. 7 is a flowchart illustrating how cranking time mapping data and voltage drop mapping data are prepared according to the embodiment. FIG. 8 is a flowchart illustrating heater control processing.

As shown in FIG. 7, the controller 11 uses measurement results of the voltmeter 15 and ammeter 16 of the measuring device 14 and determines that cranking is generated, based on the voltage characteristics of the battery 10 which performs the charging/discharging operation shown in FIG. 3 (step S1).

Next, the controller 11 detects a voltage drop (300), a cranking time (301), the ambient temperature of the battery 10 and the SOC of the battery 10 from the voltage characteristics shown in FIG. 3, and records the detected results, for example, in an internal memory (step S2). At the time, the controller 11 receives the measurement result output from the temperature sensor 13 and records the received result as an ambient temperature of the battery 10. The SOC is a value corresponding to the remaining capacity (charging rate) of the battery 10.

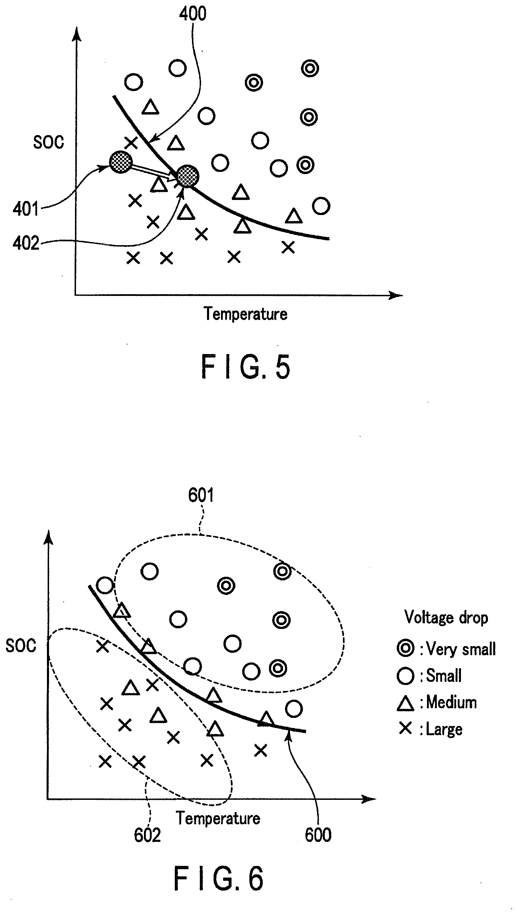

Based on the recorded data, the controller 11 prepares cranking time mapping data and voltage drop mapping data (step S3). FIG. 4 is a graph illustrating the cranking time mapping data. FIG. 6 is a graph illustrating the voltage drop mapping data. FIG. 5 is a graph illustrating how the cranking time mapping data and the heater control are related to each other, as will be described later.

As shown in FIG. 4, the cranking time mapping data is data obtained by mapping the cranking time, based on the relationship between the ambient temperature of the battery 10 and the SOC (the remaining capacity of the battery 10). As shown in FIG. 6, the voltage drop mapping data is data obtained by mapping the degree of voltage drop, based on the relationship between the ambient temperature of the battery 10 and the SOC (the remaining capacity of the battery 10).

The controller 11 calculates a minimum start condition (400) of the engine 22, based on the cranking time mapping data, and also calculates a resistance switching boundary (600) of the heater 12, based on the voltage drop mapping data (step S4). As shown in FIG. 4, the minimum start condition (400) of the engine 22 is calculated based on an engine start capability, and this capability is determined in a comprehensive manner, based on the load of the engine 22, the efficiency of the cell motor 20, the load of the vehicle body 2 (including the deterioration of the engine 22 and cell motor 20), the ambient temperature of the battery 10, and the SOC.

As shown in FIG. 6, the resistance switching boundary (600) of the heater 12 is determined in a comprehensive manner based on the deterioration of the battery 10, and is calculated based on an internal resistance whose resistance value can be switched in a stepwise manner in accordance with the heating characteristics of the heater 12. Each time the generation of cranking is detected, the controller 11 repeats the processing shown in FIG. 7 and updates the cranking time mapping data and the voltage drop mapping data.

The heater control processing of the controller 11 will be described with reference to the flowchart shown in FIG. 8. As shown in FIG. 8, the controller 11 determines that cranking is generated (step S10), as in step S1 shown in FIG. 7. Then, as in step S2 shown in FIG. 7, the controller 11 detects a voltage drop, a cranking time, the ambient temperature of the battery 10 and the SOC and prepares (or updates) the cranking time mapping data and the voltage drop mapping data (step S11).

The controller 11 starts the ON/OFF control of the heater 12, based on the cranking time mapping data (step S12). In addition, the controller 11 selects a resistance of the heater 12 from the voltage drop mapping data (step S13). To be more specific, in step S13, the controller 11 optimally controls the output (heat generation) of the heater 12, based on the voltage drop mapping data.

The output control of the heater 12 will be described with reference to FIG. 6. In FIG. 6, the upper right area (601) relative to the resistance switching boundary (600) of the heater 12 is an area in which the voltage drop of the battery 10 is comparatively small. The lower left area (602) is an area in which the voltage drop of the battery 10 is comparatively large.

In the lower left area (602), the temperature is low and the SOC is low. Since the internal resistance of the battery 10 is high as compared with the resistance corresponding to the minimum start condition of the engine, the voltage drop is large. In this case, if the resistance of the heater 12 is lowered to increase the output of the heater 12, a desirable heater output may not be obtained due to the voltage drop of the battery 10. In the lower left area (602), therefore, the controller 11 increases the resistance of the heater 12 and causes the heater 12 to generate a proper amount of heat, based on the voltage drop mapping data.

In the upper right area (601), the temperature is high, and since the internal resistance of the battery 10 is low as compared with the resistance corresponding to the minimum start condition of the engine, the voltage drop is small. In this case, therefore, the controller 11 decreases the resistance of the heater 12 and causes the heater 12 to generate a proper output (a proper amount of heat).

Turning back to FIG. 8, when the controller 11 starts the ON/OFF control based on the cranking time mapping data in step S12, the controller 11 calculates a minimum start condition (400) of the engine 22, as described above. Then, the controller 11 checks the temperature of the battery 10 and the SOC to see whether they exceed the minimum start condition (400) of the engine 22 (the upper right area of FIG. 5) or they do not exceed the minimum start condition (400) (the lower left area of FIG. 5) (step S14).

Where the state (402) of the battery 10 exceeds the minimum start condition (400) of the engine 22 (the upper right area), the controller 11 turns off the heater 12 (YES of step S14 and step S15). That is, the controller 11 determines that the temperature of the battery 10 and the SOC exceed the minimum engine start condition, and does not cause the heater 12 to start heating treatment or turns off the heater 12. In other words, the controller 11 determines that the battery 10 has the remaining capacity (SOC) necessary for starting the engine and the battery 10 need not be heated by the heater 12.

Where the state (402) of the battery 10 does not exceed the minimum start condition (400) of the engine 22 (the lower left area), the controller 11 turns on the heater 12. That is, the controller 11 determines that the temperature of the battery 10 and the SOC do not exceed the minimum engine start condition, and causes the heater 12 to start heating treatment (NO in step S14 and step S17). In other words, where the controller 11 determines that the minimum engine start condition is not exceeded, heating treatment by the heater 12 is started to improve the output characteristics of the battery 10.

Where, as a result of the heating treatment by the heater 12 (step S17), the state of the battery 10 (the temperature and the SOC) exceeds the minimum start condition (400) of the engine 22 (namely, a change from a state in the lower left area (401) to a state in the upper right area (402)), the controller 11 turns off the heater 12 (YES in step S14 and step S15).

The controller 11 determines (detects) that an event to start the engine 22 is generated, based on the charging operation which the battery 10 starts after the cranking. If the charging operation of the battery 10 is not started after the cranking, the controller 11 determines that the start-up of the engine fails, and advances to a re-cranking process (step S16). That is, the controller 11 repeats the processing shown in FIGS. 7 and 8.

As described above, the present embodiment relates to a heater control apparatus and a heater control method for an on-board battery installed on a vehicle. A minimum engine start condition is calculated based on the relationship between the ambient temperature of the battery and the SOC (remaining capacity), and the heater is controlled based on the minimum engine start condition. To be more specific, when the state of the battery does not exceed the minimum engine start condition at comparatively low temperature, the heater is turned on to execute heating treatment. Therefore, the output characteristics of the battery can be enhanced at low temperature, and the battery can provide power required for starting the engine.

When, as a result of the heating treatment, the state of the battery exceeds the minimum engine start condition, the heater is turned off to stop the heating treatment. Since the heater is turned on or off in accordance with the state of the battery determined based on the temperature of the battery and the SOC, stepwise control can be executed.

Since the heater consumes the electric power of the battery, the electric power of the battery may be wasted, resulting in insufficient remaining capacity of the battery, when the temperature is low or before the engine is started. According to the present embodiment, the controller 11 estimates an engine start enabling area (see FIG. 5) and automatically stops the heating treatment by the heater 12. Therefore, the electric power of the battery 10 needed for the cranking is prevented from being wasted. Optimal heater control is thus enabled, which prevents the remaining capacity of the battery from becoming insufficient and which enables providing a battery output necessary for starting the engine.

According to the present embodiment, if the cranking fails, a proper resistance can be selected for the heater 12 in accordance with the relationship between the temperature of the battery and the SOC. Therefore, the efficient output control of the heater 12 can be performed (see step S13 in FIG. 8), which shortens the waiting time before the start of the engine.

According to the present embodiment, the cranking time mapping data and the voltage drop mapping data are updated each time cranking is performed, as described above. Therefore, proper heating treatment by the heater can be performed in accordance with the efficiency of the cell motor 20, a deterioration of start-up performance attributable to the vehicle body 2 (such as an engine load) and degradation of the cranking performance attributable to the deterioration of the battery 10.

According to the present embodiment, the controller 11 may measure the temperature of the battery and the SOC in response to an accessory (i.e., an electric instrument such as a light) being turned on before the engine start and calculate the minimum engine start condition 400.

Where a notification function is available to transmit information from the battery pack 1 to the vehicle body 2, the controller 11 may be configured to notify the vehicle body 2 of whether or not heating treatment by the heater 12 is required, an estimated heating time, and an ON/OFF status of the heater 12. Owing to this, the vehicle body 2 can take control of the need for the heater 12 and the waiting time before the start of the engine. In addition, the cranking is prevented from failing, and the electric power of the battery 19 is prevented from being wasted.

Where the notification function mentioned above is not available, heating treatment by the heater 12 is performed a necessary number of times in accordance with the re-cranking operation by the operator. Thereafter, the heater 12 is turned off and the power consumption by the battery 10 is suppressed.

### [Modification]

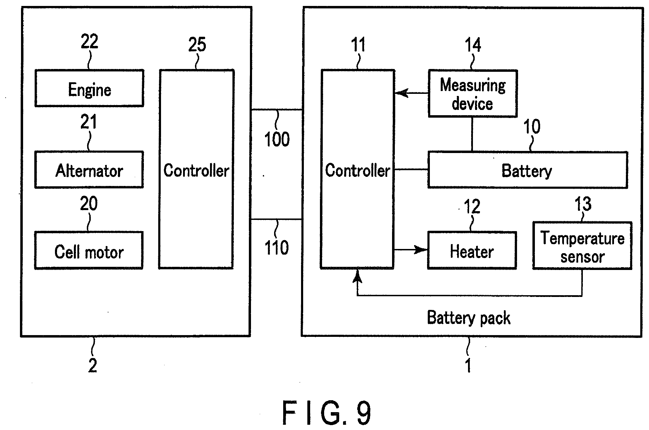

FIG. 9 is a block diagram illustrating a modification of the embodiment. In the above-mentioned embodiment, the battery pack 1 incorporates the controller 11 for performing the overall control of the battery pack 1 and the measuring device 14 including both a voltmeter and an ammeter, as shown in FIG. 1.

According to the present modification, the vehicle body 2 incorporates a controller 25, as shown in FIG. 9, and this controller 25 performs the heater control processing for the battery pack 1. In other words, according to the present modification, the controller 25 of the vehicle body 2 functions as a heater-control controller, and the controller 11 of the battery pack 1 functions as a kind of interface. To be specific, the controller 25 of the vehicle body 2 is connected to the controller 11 of the battery pack 1 via a control signal line 110, and exchanges various control signals and measurement signals with the battery pack 1. Since the other configurations and their operations are similar to those described in connection with the above embodiment, a description of such configurations and operations will be omitted.

According to the modification, the controller 25 of the vehicle body 2 receives measurement signals supplied from the temperature sensor 13 and the measuring device 14 by way of the controller 11 and the control signal line 110. Controller 25 prepares cranking time mapping data and voltage drop mapping data in such a manner as described with reference to FIGS. 7 and 8, and executes analysis processing (determination processing) based on the minimum start condition of the engine 22. To control the heating treatment by the heater 12, controller 25 supplies control signals, with which the heater 12 is turned on or off, to the controller 11 of the battery pack 1 by way of control signal line 110. With this configuration, controller 11 turns the heater 12 on or off.

According to the present modification, the controller 25 included in the vehicle body 2 functions as a heater-control controller and executes a series of heater control processing to optimally control the heater 12. The controller 11 of the battery pack 1 functions as an interface with the vehicle body 2. With this configuration of the modification, the battery pack 1 does not have to employ a heater-control controller, so that it can be easily standardized as a commercial product. According to the present modification, the controller 25 of the vehicle body 2 can directly notify the operator of the vehicle body 2 of whether or not heating treatment by the heater 12 is required, an estimated heating time, and an ON/OFF status of the heater 12, with no need to use the battery pack 1.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A heater control apparatus for a battery, comprising:
a temperature sensor (13) configured to detect a temperature of the battery (10), which outputs electric power for a driving target (2); and
a controller (11) configured to control a heater (12) used for heating the battery (10), **characterized in that** the controller (11) is configured to:
calculate a minimum start condition corresponding to start characteristics of the driving target (2), based on relationships between remaining capacity of the battery (10) and the temperature; and
control the heater (12) based on the minimum start condition.

2. The heater control apparatus of Claim 1, **characterized in that** the controller (11) is further configured to:
prepare data used for calculating the minimum start condition, based on the remaining capacity of the battery (10) and the temperature, during a time for a preparatory operation which is before start of the driving target (2); and
control the heater (12) based on the data.

3. The heater control apparatus of Claim 1, **characterized in that** the controller (11) is further configured to:
prepare data representing a temporal situation of a preparatory operation, based on the relationship between the remaining capacity of the battery (10) and the temperature, during a preparatory operation which is before start of the driving target (2);
calculate the minimum start condition based on the data; and
control the heater (12) based on a state of the battery (10) and the minimum start condition.

4. The heater control apparatus of Claim 1, **characterized in that** the controller (11) is further configured to:
turn on the heater (12) where a state of the battery (10) does not reach the minimum start condition; and
control the heater (12) from on to off where the state of the battery (10) reaches the minimum start condition.

5. The heater control apparatus of Claim 1, **characterized in that** the controller (11) is further configured to:
prepare data used for calculating a resistance switching boundary, based on the relationship between the remaining capacity of the battery (10) and the temperature, during a preparation time before start of the driving target (2); and
select a resistance of the heater (12) and control the heater (12) based on the data.

6. The heater control apparatus of Claim 1, **characterized in that** the controller is further configured to:
prepare data representing a voltage drop of the battery (10) based on the relationship between the remaining capacity of the battery (10) and the temperature, during a preparatory operation which is before start of the driving target (2);
calculate a resistance s witch boundary of the heater (12) based on the data; and
select a resistance of the heater (12) based on a state of the battery (10) and the resistance switch boundary and control the heater (12).

7. The heater control apparatus of Claim 2, **characterized in that** the driving target (2) is a vehicle,
the preparatory operation is cranking performed before an engine (22) of the vehicle is started, and
the minimum start condition is a minimum engine start condition.

8. The heater control apparatus of Claim 7, **characterized in that** the battery (10) undergoes a voltage drop when the cranking is performed in a discharge state, and charges into a charge state when the engine (22) is started.

9. The heater control apparatus of Claim 1, **characterized in that** the controller (11) is included in an apparatus body, which is the driving target (2), and is connected to the battery (10), the temperature sensor (13) and the heater (12), which are provided externally of the apparatus body.

10. The heater control apparatus of Claim 7, **characterized in that** the controller (11) is included in a main body of the vehicle, and is connected to the battery (10), the temperature sensor (13) and the heater (12), which are provided externally of the main body of the vehicle.

11. A method for controlling a heater (12) for a battery (10) and applicable to a heater control apparatus including a temperature sensor (13) for sensing a temperature of the battery (10) which outputs electric power for a driving target (2); and a controller (11) for controlling a heater (12) which heats the battery (10),
the method **characterized by** comprising:
calculating a minimum start condition corresponding to start characteristics of the driving target (2), based on relationships between remaining capacity of the battery (10) and the temperature; and
controlling the heater (12) based on the minimum start condition.

12. The method according to Claim 11, **characterized by** comprising:
preparing data used for calculating the minimum start condition, based on the relationship between the remaining capacity of the battery (10) and the temperature, during a time for a preparatory operation which is before start of the driving target (2); and
controlling the heater (12) based on the data.

13. The method according to Claim 11, **characterized by** comprising:
preparing data representing a temporal situation of a preparatory operation based on the relationship between the remaining capacity of the battery (10) and the temperature, during the preparatory operation which is before the start of the driving target (2), and
calculating the minimum start condition based on the data, and
controlling the heater (12) based on a state of the battery (10) and the minimum start condition.

14. The method of Claim 11, wherein controlling the heater **characterized by** comprising:
turning on the heater where the state of the battery (10) does not exceed the minimum start condition, and
controlling the heater (12) from on to off where the state of the battery (10) exceeds the minimum start condition.

15. The method according to Claim 11, **characterized by** comprising:
preparing data used for calculating a resistance switching boundary, based on the relationship between the remaining capacity of the battery (10) and the temperature, during a time for a preparatory operation which is before start of the driving target (2); and
selecting a resistance of the heater (12) and controlling the heater (12) based on the data.
